Europäisches Patentamt

European Patent Office

Office européen des brevets

(19)

(11) **EP 0 739 655 B1**

(12) **EUROPÄISCHE PATENTSCHRIFT**

(45) Veröffentlichungstag und Bekanntmachung des Hinweises auf die Patenterteilung:
**31.03.1999 Patentblatt 1999/13**

(51) Int. Cl.$^6$: **B05D 7/02**, B05D 7/24

(21) Anmeldenummer: 95106495.5

(22) Anmeldetag: 28.04.1995

(54) **Verfahren zu plasmagestützten Herstellung multifunktionaler Schichten auf Kunststoffteilen**

Process for plasma coating a plastic object with multifunctional layers

Procédé pour revêtir à l'aide d'un plasma un objet en plastique de couches multifonctionnelles

(84) Benannte Vertragsstaaten:
**CH DE FR GB IT LI NL SE**

(43) Veröffentlichungstag der Anmeldung:
**30.10.1996 Patentblatt 1996/44**

(73) Patentinhaber:
**INPRO Innovationsgesellschaft für fortgeschrittene Produktionssysteme in der Fahrzeugindustrie mbH**
**10587 Berlin (DE)**

(72) Erfinder:
• **Räuchle, Eberhard, Dr.**
  **c/o IPF-Inst. für Plasmafor**
  **D-70569 Stuttgart (DE)**
• **Walker, Mathias**
  **c/o IPF-Inst. für Plasmaforschung**
  **D-70569 Stuttgart (DE)**
• **Gleich, Henning**
  **c/o INPRO .... GmbH**
  **D-10587 Berlin (DE)**
• **Hoyer, Olaf**
  **c/o INPRO .... GmbH**
  **D-10587 Berlin (DE)**
• **Vollweiler, Götz**
  **c/o INPRO .... GmbH**
  **D-10587 Berlin (DE)**

(74) Vertreter:
**Hoffmann, Klaus-Dieter, Dipl.-Ing.**
**Kurfürstendamm 182**
**10707 Berlin (DE)**

(56) Entgegenhaltungen:
**DE-A- 3 908 418**

**Beschreibung**

Die Erfindung betrifft ein Verfahren zur plasmagestützten Herstellung multifunktionaler Schichten auf Kunststoffteilen, insbesondere auf der Innenoberfläche von Kunststoffkraftstoffbehältern (KKB) aus Polyethylen, gemäß dem Oberbegriff des Patentanspruchs 1.

Die Reduktion der Durchlässigkeit von festen Körpern, insbesondere von Polymeren (Kunststoffen) gegen Gase und Flüssigkeiten ist bei vielen Anwendungen wünschenswert. In der Verpackungsindustrie soll das Verpackungsmaterial z. B. Folien aus Polyethylen undurchlässig von außen gegen Einwirkungen der Umgebung, oder auch von innen gegen das Ausdünsten von verpackten Stoffen geschützt sein. Eine Sonderanwendung stellt die Verringerung der Durchlässigkeit von Flüssigkeiten, Z. B. Kraftstoff durch Behälter dar. Im Fall von Kraftstoff ist eine Reduktion der Permeation durch Behälter aus Polyethylen um den Faktor 100 - 1.000 gegenüber dem ungeschützten Behältermaterial notwendig, um einen problemlosen Einsatz von Polyethylenbehältern als Kunststoffkraftstoffbehälter (KKB) zu ermöglichen. Zusätzlich zur günstigen Eigenschaft der Verringerung der Permeation hat die aufgebrachte Schicht weitere funktionelle Bedingungen zu erfüllen. Sie muß beispielsweise auf dem Grundmaterial ideal haften und chemisch stabil sein. Das technologische Verfahren zur Schichtabscheidung muß wirtschaftlich und nicht umweltbelastend sein.

Es ist bekannt (DE 39 33 874 A1), zur Oberflächenmodifizierung von Behältern aus Polyolefin letztere einem Niederdruckplasma in einer ein fluorhaltiges Gas aufweisenden Atmosphäre auszusetzen. Bekannt ist weiterhin ein Verfahren zur Behandlung von Oberflächen von Teilen, insbesondere der Innenflächen von Kraftstoffbehältern aus Polyethylen, mit einem unter Normalbedingungen inerten Medium (DE 30 27 531 C2), bei dem als Medium eine fluorierte Schwefelverbindung oder ein Halogenkohlenwasserstoff in eine auch die Oberfläche enthaltene Unterdruckkammer eingeführt und durch Energiezufuhr bei reduziertem Druck in der Unterdruckkammer in den Plasmazustand gebracht wird.

Zur Beschichtung von Hohlkörpern mit polymeren Deckschichten durch Plasmapolymerisation ist es ferner bekannt (DE 36 32 748 C2), den zu beschichtenden Hohlkörper in eine Mikrowellenkammer einzubringen, dann den zu beschichtenden Hohlkörper und/oder die Mikrowellenkammer zu evakuieren, plasmapolymerisierbare Monomere in das Innere des Hohlkörpers zu injizieren, Mikrowellen zur Zündung des Plasmas einzukoppeln und unter Einwirkung des Plasmas eine polymere Deckschicht herzustellen.

Bekannt ist schließlich ein Verfahren zum Innenbeschichten von Kunststoffbehältern mit für organische Lösungsmittel undurchlässigen Schichten (DE 39 08 418 A1), bei dem die Innenseite des Behälters mit einem Niederdruckplasma beaufschlagt wird und die das Plasma bildende Gasatmosphäre

a) eine unter diesen Bedingungen polymerisierbare gas- oder dampfförmige organische Komponente und

b) eine polarisierende Gruppe an die polymerisierende Schicht abgebende gas- oder dampfförmige Verbindung enthält,

wobei a) und b) auch aus einer einheitlichen Verbindung bestehen können.

Bei Verfahren der eingangs erwähnten Art, mit denen homogene Schichten nach einer Vor- und Nachbehandlung erzeugt werden, genügen diese nicht den hohen Wechselbeanspruchungen bei Veränderungen des Kunststoffsubstrats. Aufgrund des Aufeinandertreffens von extrem spröder Dünnschicht und extrem weicher Kunststoffe als Träger, besteht die Gefahr der Schichtbeschädigung oder sogar Zerstörung bei den möglichen Belastungsfällen. Noch extremer reagieren diese Schichten auf Beanspruchungen unter Einfluß von als Weichmacher wirkenden Medien, denen die Bauteile ausgesetzt sind. Besonders in diesen Fällen war es bislang nicht möglich, gegen Flüssigkeiten mit gleichermaßen polaren wie unpolaren Bestandteilen eine wirksame Diffusions- bzw. Permeationssperre herzustellen. Um so weniger unterschiedliche Molekülarten im permeierenden Medium existieren, um so einfacher ist die Schichteinstellung, da weniger spezifische Diffusionsmechanismen zu berücksichtigen sind. Bei komplexen Mischungen jedoch, wie z.B. Kraftstoffen, stellen neue Additive und unterschiedliche Alkoholanteile herkömmliche Barriereschichten vor Probleme.

Mit Alternativverfahren, wie der chemischen Fluorierung, kann bislang eine zyklisch alternierende und mit definierten Elementanteilen aufgebaute Schicht nicht erreicht werden. Die Barrierewirkung bei der Fluorierung basiert im wesentlichen auf der Wirkung von Fluor und zu geringen Prozentanteilen auch von Sauerstoff. Außerdem fehlt den meisten Alternativverfahren die Resistenz gegen Wechsel- und Dauerbeanspruchung.

Dem erfindungsgemäßen Verfahren liegt die Steuerung des Aufbaus der chemischen Struktur plasmapolymerisierter Schichten auf Kunststoffteilen durch unterschiedlichste Monomer- und Trägergas-Kombinationen zugrunde.

Der Erfindung liegt die Aufgabe zugrunde, ein Verfahren der eingangs erwähnten Art zur Verfügung zu stellen, mit dem an der Oberfläche von Kunststoffteilen, wie z. B. Kunststofftanks, plasmapolymerisierte Schichten aufgebracht werden können, die den aggressiven Dauerbeanspruchungen widerstehen, die durch zukünftig gesetzlich vorgeschriebene neue Prüfmethoden und -medien erfüllt werden müssen.

Diese Aufgabe wird durch die aus den Patentansprüchen hervorgehenden Verfahrensmaßnahmen gelöst.

Erfindungsgemäß werden unter Erzeugung einer Dünnschicht die Gasanteile der Prozeßgasatmosphäre über die Prozeßzeit durch variierende Monomer- und Trägergaskombinationen derart wechselnd gesteuert, daß polare und unpolare Elementanteile in der Dünnschicht variiert eingebaut werden. Vorzugsweise werden die polaren und unpolaren Elementanteile in der Dünnschicht zyklisch wechselnd variiert.

In besonders vorteilhafter Weise wird erfindungsgemäß unter wechselnder Steuerung der Gasanteile der Prozeßgasatmosphäre über die Prozeßzeit durch variierende Monomer- und Trägergaskombinationen ein getaperter Schichtaufbau der Dünnschicht derart erzeugt, daß die auf die Kunststoffteiloberfläche aufgebrachte erste Moleküllage chemisch identisch oder verwandt mit dem Material des Kunststoffteils ist und an diese erste Phase ein angepaßter chemischer Übergang zu der nach außen wirksamen, eine Benetzbarkeit des getaperten Schichtaufbaus verringernden Moleküllage gebildet wird.

Insbesondere wird bei einem Kohlenwasserstoff-Schichtaufbau die Sperrwirkung der plasmapolymerisierten Schichten mit einem zusätzlich zyklisch variierenden $O_2$-Anteil verbessert. Ein zyklischer Schichtaufbau aus Kohlenwasserstoffen und Fluorkohlenwasserstoffen wird vorzugsweise durch wechselnde Fluoranteile im Prozeßgas erreicht.

Das erfindungsgemäße Verfahren gewährleistet zum einen eine äußerst haftfähige Oberfläche als Untergrund der Dünnschicht sowie zum anderen eine dem zu beschichtenden Bauteilwerkstoff ähnlich nachempfundene Anfangsschicht, der in weiterer zyklisch den jeweiligen Anforderungen angepaßte veränderte Schichtlagen folgen und somit die Beständigkeit gegenüber Veränderungen des Trägerwerkstoffs oder -bauteils erhöhen.

Mit dem erfindungsgemäßen Verfahren können nachweisbar z. B. Permeationsdurchlässigkeiten von Kunststoffolien bis zu einem Faktor von 2000 und mehr erniedrigt werden. Mit dem erfindungsgemäßen Verfahren lassen sich multifunktionelle Schichten sozusagen maßschneidern, und es können sowohl die erwünschten Eigenschaften erzielt als auch die Langzeitstabilität durch den mikrorißresistenten Schichtaufbau erhöht werden.

Bei dem Kohlen-/Wasserstoff-Schichtaufbau und dem Einsatz eines zusätzlichen zyklisch variierenden $O_2$-Anteils im Prozeßgas basiert die verbesserte Sperrwirkung der plasmapolymerisierten Schichten auf folgenden Mechanismen:

Hohe Flexibilität der Schicht in den sauerstoffarmen Bereichen, dadurch Verhinderung von Rißbildung.

Hohe Packungsdichte in den sauerstoffreichen Bereichen, dadurch gute Sperrwirkung.

Ein "sanftes" Ansteigen (oder Abfallen) des $O_2$-Gehalts im Reaktionsgas ermöglicht gute Haftung der verschiedenen Bereiche aneinander, und damit eine gute Schichtstabilität.

Durch ein mehrfaches Wiederholen der zyklischen Sauerstoffzugabe zum Reaktionsgas wird ein Siebeffekt wirksam: die polaren Kraftstoffanteile lagern sich über Wasserstoffbrücken an die sauerstoffreichen Schichtanteile an und in sie ein und blockieren den Durchgang der unpolaren Kraftstoffanteile; besitzen ihrerseits aber wenig Affinität zu den sauerstoffarmen, unpolaren Schichtanteilen, was wiederum ihr Weiterwandern erschwert.

Durch Einbringen des Reaktionsgases in den zu beschichtenden Hohlkörper über sogenannte Verteilerköpfe ist es möglich, das Gas und damit das Plasma gleichmäßiger im Hohlraum zu verteilen. Dadurch werden die Strömungsverhältnisse homogener gestaltet und es wird verhindert, daß die reaktiven Teilchen sich vor allem an einer von der Strömung bevorzugten Stelle niederschlagen, was zu Inhomogenitäten im Permeationsverhalten führen würde.

Die Schicht kann inhomogen sein, sie muß jedoch überall gewährleisten, daß eine vorgegebene Permeationsrate nicht überschritten wird. Die Verteilerköpfe bringen den Vorteil mit sich, daß der Beschichtungsprozeß als solcher leichter reproduzierbar würde, da ein weiterer Parameter, nämlich die Richtung des Gasstroms bei seinem Eintritt in den Hohlkörper, steuerbar würde.

Derartige Verteilerköpfe sollten im Falle von mikrowellenangeregter Plasmapolymerisation aus mikrowelleninaktiven Materialien bestehen und möglichst viele kleine Austrittsöffnungen aufweisen.

Vorzugsweise wird ausgehend von der Oberfläche eines Kunststoffteils aus Polyethylen ein getaperter Schichtaufbau einer Schichtdicke von 350 nm unter Verwendung von Kohlenwasserstoffen, vorzugsweise von Ethen ($C_2H_4$), Trifluormethan ($CF_3H$) und variierenden Mischungen aus diesen beiden Monomeren in gesteuerter Weise wie folgt hergestellt:

a) eine 70 nm Schicht aus einem $C_2H_4$-Plasma bei einem Gasdurchfluß von 30 sccm und einem Druck von 2 Pa,

b) eine 50 nm Schicht aus einer Gasmischung von 30 sccm $C_2H_4$ und 30 sccm $CF_3H$ bei einem Druck von 4 Pa,

c) eine 40 nm Schicht aus einer Gasmischung von 8 sccm $C_2H_4$ und 30 sccm $CF_3H$ bei einem Druck von 3 Pa,

d) eine 35 nm Schicht aus einer Gasmischung von 4 sccm $C_2H_4$ und 30 sccm $CF_3H$ bei einem Druck von 2.8 Pa,

e) eine 35 nm Schicht aus einer Gasmischung von 2.5 sccm $C_2H_4$ und 30 sccm $CF_3H$ bei einem Druck

von 2.7 Pa,

f) eine 25 nm Schicht aus einer Gasmischung von 1.0 sccm $C_2H_4$ und 30 sccm $CF_3H$ bei einem Druck von 2.6 Pa und

g) eine 95 nm Schicht aus einem $CF_3H$-Plasma bei einem Gasdurchfluß von 30 sccm und einem Druck von 2.6 Pa, wobei das Plasma unter Anwendung der Elektron-Zyklotron-Resonanz mit einer mittleren Mikrowellenleistung von 300 Watt bei einem Druck von 5 Pa erzeugt wird.

Anstelle der obigen speziellen Fluor- und Kohlenwasserstoffverbindungen können andere fluorhaltige und kohlenwasserstoffhaltige Monomere treten.

Es zeigt sich, daß ein zeitlich abgestimmtes Mischungsverhältnis der Monomere und damit ein getaperter Schichtaufbau für die Eigenschaft der Schicht bezüglich der Permeation sehr wichtig ist.

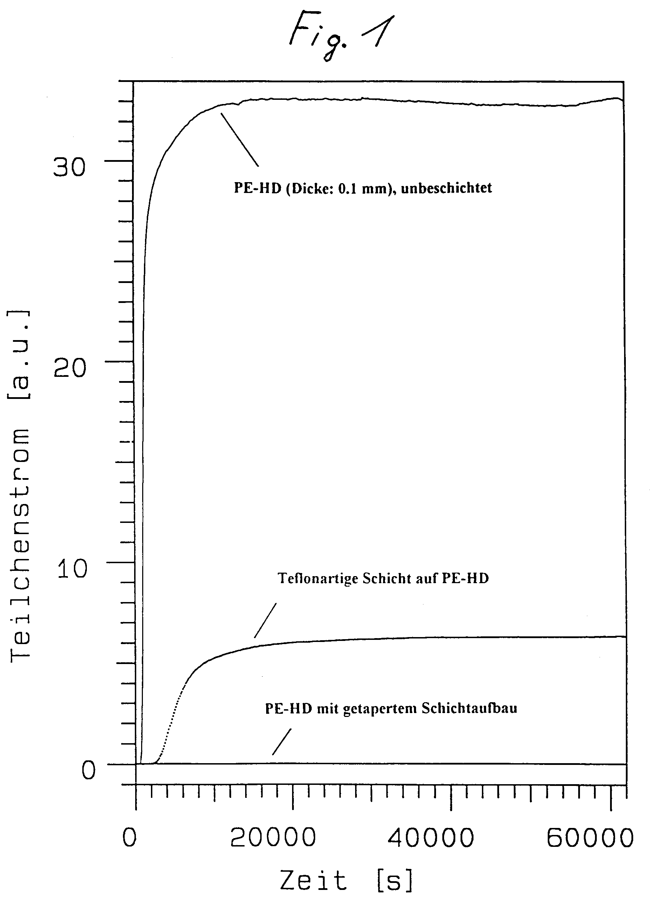

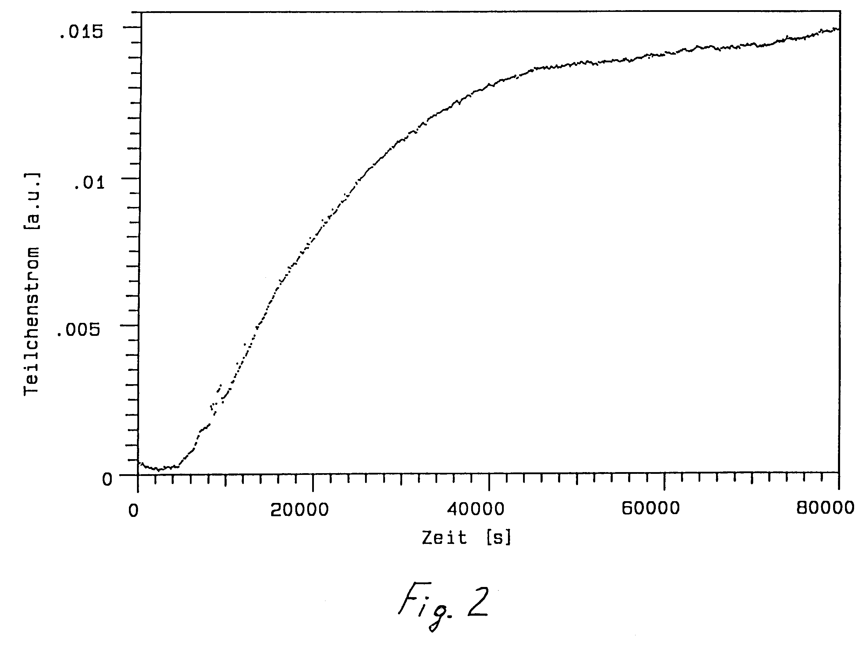

Das verwendete Ethengas wird im Plasma teilweise zerlegt und scheidet auf der Polyethylenoberfläche eine relativ weiche, elastische, dem Polyethylen verwandte Schicht ab. Die Zugabe von Trifluormethan in das Ethenplasma bewirkt, daß zunehmend Fluoratome in die Schicht mit eingebaut werden. Die oberste Schicht des Schichtsystems besteht vorwiegend aus Kohlenstoff- und Fluoratomen mit nur noch geringen Anteilen von Wasserstoffatomen. Diese dem Teflon verwandte Schicht bewirkt die eigentliche Reduktion der Permeation. Sie bewirkt eine Verringerung der Benetzbarkeit des Permeenten an der Oberfläche. Dies hat eine Erniedrigung der Anfangskonzentration des Permeenten an der Oberfläche und damit eine sehr große Erniedrigung der Permeation zur Folge. Wird eine teflonartige Schicht direkt auf das Grundmaterial aufgebracht, so läßt sich damit keine große Reduzierung der Permeation erreichen (Fig. 1), da sich die Schicht sowohl in ihren chemischen als auch mechanischen Eigenschaften von dem Grundmaterial in sehr hohem Maße unterscheidet. Erst durch den erfindungsgemäß hergestellten getaperten Schichtaufbau, der durch unterschiedliche Mischungen zwischen Ethen und Trifluormethan erreicht wird, kann eine vorteilhafte chemische und strukturelle Veränderung der Schicht erzielt werden. Das kann mit Hilfe der Infrarotabsorptionsspektroskopie und Rasterelektronenmikroskopie gezeigt werden. Messungen der Permeation von Toluol durch Polyethylenfolien (Dicke: O.1 mm) mit einem getaperten Schichtaufbau ergaben eine Reduzierung der Permeation um mehr als einen Faktor 1.000 gegenüber der unbeschichteten Folie (Fig. 1 und 2). Vergleichbare Ergebnisse konnten auch gegenüber Kraftstoff (Haltermann-Referenzkraftstoff, Super bleifrei) erzielt werden.

Die Permeation von Kohlenwasserstoffen durch Polyethylen kann als Diffusionsvorgang theoretisch beschrieben werden. Der räumliche und zeitliche Verlauf der Konzentration z. B. von Toluol in der Polyethylenfolie oder -wand erhält man durch die Lösung der Diffusionsdifferentialgleichung. Das Diffusionsverhalten des Polyethylens gegenüber Kohlenwasserstoffen ist wesentlich durch eine nichtlineare Diffusionskonstante $D(c) = D_0 * \exp(\text{Konzentration}/c_0)$ beschrieben. Durch eine geeignete Wahl der Parameter $D_0$ und $c_0$ kann das Schwellverhalten des Polyethylens beschrieben werden. Die theoretische Behandlung in dieser Form ermöglicht eine Optimierung und eine erleichterte meßtechnische Erfassung der Diffusionsvorgänge in der Behälterwand. Auf diese Weise kann die Testzeit bei der Messung der Permeation, die üblicherweise mehrere Monate in Anspruch nimmt, in vielen Fällen auf Tage verkürzt werden.

Durch die obige theoretische Behandlung kann der zeitliche Verlauf der Permeation sowie der sich stationär einstellende Fluß des Permeenten sehr gut beschrieben werden. Es ergibt sich, daß stationäre Verhältnisse bei Folien - wie gemessen (Fig. 1 und 2) - nach ca. 80.000 s erreicht werden.

Entscheidend für eine verringerte Diffusion ist der durch die aufgebrachte Schicht verminderte Diffusionsstrom und die damit im Kunststoff reduzierte Konzentration des Permeenten. Letzteres führt zu einer Verringerung der nichtlinearen Diffusionskonstanten $D(c)$.

Die Übertragung dieser Untersuchungen auf die Verhältnisse bei KKB ergibt eine Einstellungszeit für das Erreichen eines stationären Zustandes von mehreren Monaten.

Erschwerend für die Innenbeschichtung von Hohlkörpern ist die Zuführung der Reaktionsgase und eventuell der elektromagnetischen Leistung für die Plasmaerzeugung durch die relativ kleine Öffnung des Tankstutzens. Die Behälter können geometrisch einfach strukturiert sein, z. B. flaschenähnliche Behälter oder auch sehr stark geometrisch ausgeformt sein. Letztere Bauweise ist bei Kraftstofftanks im Automobil für eine kompakte Bauweise von Interesse.

Bei stark strukturierten Behälterformen muß bei der Innenbeschichtung gewährleistet sein, daß an allen Wandungen eine ausreichende Beschichtung erfolgt. Bei auch nur kleinflächiger unzureichender Beschichtung kann sonst die große Reduktion der Permeation des Kraftstoffs um das 1.000fache nicht erreicht werden.

Um bei komplizierter Behältergeometrie zu erreichen, daß bei dem Beschichtungsvorgang die chemisch aktiven Moleküle (Radikale) auch in Höhlungen vordringen können, muß die freie Weglänge L der Radikale relativ groß sein.

Mit $L = 1/(\text{Teilchendichte} * \text{Stoßquerschnitt})$ erhält man für einen typischen Stoßquerschnitt von $1 * 10^{-15}$ cm$^{-2}$ für einen Gasdruck von O.1 mbar eine freie Weglänge von ca. 1 cm, ein Wert, der für eine homogene Beschichtung erstrebenswert ist. Damit ist eine Plasmabeschichtung bei niederen Drücken günstig.

Um Deformationen des Tanks zu vermeiden, sollte die Druckdifferenz zwischen dem Inneren und Äußeren des Behälters nicht zu groß sein. Eine Möglichkeit, dies zu erreichen und Dichtprobleme zu vermeiden, ist die Anordnung des Behälters in einer Niederdruckkammer bei geöffnetem Tankstutzen.

Ein herkömmliches Verfahren zur Innenbeschichtung mit Mikrowellen beruht darauf, daß eine von außen durch den Behälter eindringende Mikrowelle im Inneren des Behälters ein Plasma erzeugt. Um hierbei aber eine gleichzeitige Plasmabildung auf der Außenseite des Behälters zu vermeiden, muß der Druck im Behälter genau dem Zünddruck entsprechen, d.h. es muß eine Druckdifferenz zwischen Innerem und Äußerem des Behälters vorhanden sein. Hierzu ist eine Abdichtung des Behälters nötig. Außerdem erfolgt bei günstigem für die Schichtabscheidung niedrigen Druck keine Zündung mehr. Dieses Verfahren hat zusätzlich den Nachteil, daß die Plasmabildung notwendigerweise verstärkt am inneren Rand des Behälters vorhanden ist, während die Bildung der funktionellen Gruppen, die für die Schichtbildung notwendig sind, vorzugsweise im freien Volumen gebildet werden. Die Plasmabildung am Behälterrand kann zu unerwünschter thermischer Belastung und zum Abtrag von Behältermaterial und damit zu Störungen im chemischen Aufbau der Schicht führen.

Diese Nachteile lassen sich vermeiden, wenn die zur Bildung des Plasmas notwendige Ionisierungsleistung in Form elektromagnetischer Leistung durch Mikrowellen und/oder hochfrequenten Schwingungen aufgebracht werden und die Zuführung der Ionisationsleistung stationär oder gepulst erfolgt. Letzteres hat den Vorteil einer geringeren mittleren zugeführten Leistung, was u. a. eine geringere thermische Belastung der Behälterwände ermöglicht.

Folgende Anordnungen erweisen sich als günstig:

a) einfache Behältergeometrie, z. B. Flaschen.

Die elektromagnetische Leistung wird über eine Leitung durch die Behälteröffnung zugeführt, durch die auch die Zufuhr von Frischgas kombiniert oder getrennt von der elektrotechnischen Leitung erfolgt. Die Ankopplung kann kapazitiv erfolgen mit einer vorzugsweisen Plasmabildung um den Antennenstift oder durch eine Anordnung nach dem Prinzip des Gigatrons. Um auch bei niederen Drücken eine Zündung zu erreichen, werden im Innenbereich, z. B. am Antennenleiter, an der Innen- oder Außenwand, Permanent-magnete angeordnet. Die Plasmaerzeugung kann durch entsprechende Abschirmungen auf den Innenbereich des Behälters konzentriert werden.

Eine alternative Variante ist hier die Einführung von Permanentmagneten in den Innenbereich des Behälters, in dem die Plasmabildung dann erfolgt. Die Einstrahlung der Mikrowelle kann durch die Behälterwand hindurch von außen einseitig oder an örtlich bevorzugten Bereichen erfolgen.

Die Plasmaerzeugung erfolgt hier vorzugsweise im Bereich der eingebrachten Magnetfeldstruktur. Der niedere Druck, der für diese Art der Plasmaerzeugung günstig ist, bewirkt relativ große freie Weglängen und ermöglicht daher eine räumlich ausgedehnte Ausbreitung der chemisch reaktiven Spezies.

b) Komplizierte Behältergeometrie.

Je nach Behälterform kann auch hier die Mikrowelle zusätzlich zu einer Antenneneinführung durch den Behälterstutzen auch außerhalb von der einen Seite durch die Tankwand hindurch mit Hilfe einer entsprechend gestalteten Antennenform, z. B. mehrfache Hornantennen oder Schlitzantennen zugeführt werden. Auf der gegenüberliegenden Seite befinden sich außen am Behälter Permanentmagnete. Die Wirkung der Mikrowelle nach außen ist auf dieser Seite abgeschirmt.

Je nach Behälterform können die Permanentmagnete den kritischen Stellen angepaßt, angeordnet werden.

2. HF-Plasmaerzeugung

Hier hat sich die einfache Ankopplung z. B. kapazitiv über zwei Halbschalen als Elektroden auf gegenüberliegenden Behälterseiten bewährt.

Um bei komplizierten Behälterformen eine örtliche abgestimmte Verteilung der elektrischen Feldstärke zu erreichen, erweist sich eine Anordnung aus räumlich verteilten kapazitiv und/oder induktiv entkoppelten Entladungsbereichen als geeignet (Fig. 10). Dies ermöglicht eine örtlich differenzierte Zufuhr von HF-Leistung und eine räumlich optimierte Plasmaerzeugung aus einer gemeinsamen HF-Quelle.

Die Kapazitäten zur elektrischen Entkopplung können aus Kabeln bestehen.

Die Erfindung wird nun anhand der Zeichnungen erläutert. In diesen sind:

Fig.1    ein Diagramm, aus dem die Permeation von Toluol durch Polyethylenfolien hervorgeht,

Fig.2    ein Diagramm, aus der die Permeation von Toluol durch eine Polyethylenfolie mit getapertem Schichtaufbau hervorgeht,

Fig.3    ein Diagramm, aus dem das Verfahren zum zyklischen Schichtaufbau zur Reduzierung der Permeation von KKB aus PE-HD bei zyklisch variiertem Sauerstoffanteil hervorgeht.

Fig.4    ein Diagramm, das die Druckverhältnisse bei dem Verfahren gemäß der Fig. 4 über die Prozeßzeit zeigt,

Fig.5  ein Diagramm, aus dem das Verfahren zur plasmagestützten Erzeugung eines getaperten Schichtaufbaus zur Reduzierung der Permeation von Toluol durch PE-Folien bei Verwendung von Ethen ($C_2H_4$), Trifluormethan ($CF_3H$) und unterschiedlichen Mischungen aus beiden Monomeren hervorgeht,

Fig.6  ein Diagramm, das die Druckverhältnisse bei dem Verfahren gemäß Fig. 6 über die Prozeßzeit zeigt,

Fig.7  eine schematische Darstellung eines Substrats mit aufgebrachter Plasmaschicht und einer Sauerstoff-Doppelsperre in der Oberfläche und der Grenzfläche,

Fig.8  eine schematische Schnittansicht einer Anordnung zur Durchführung des Verfahrens unter Mikrowellen- oder Hochfrequenzanregung und

Fig.9  eine schematische Darstellung einer Anordnung zur HF-Plasmaerzeugung mit kapazitiv entkoppelten HF-Zuführungen.

Fig. 1 verdeutlicht die Permeation von Toluol durch Polyethylenfolien einer Dicke von 0.1 mm, wobei die obere Kurve den zeitlichen Verlauf der Permeation von Toluol durch eine unbeschichtete PE-HD-Folie, die mittlere Kurve den zeitlichen Verlauf der Permeation von Toluol durch eine mit einer teflonartigen Schicht versehene PE-HD-Folie und die untere Kurve den zeitlichen Verlauf der Permeation von Toluol durch eine PE-HD-Folie mit getapertem Schichtaufbau zeigen. Aus Fig. 1 ist ablesbar, daß keine große Reduzierung der Permeation erreicht werden kann, wenn eine teflonartige Schicht direkt auf das Grundmaterial aufgebracht wird, da sich die Schicht sowohl in ihrem chemischen als auch mechanischen Eigenschaften von dem Grundmaterial in sehr hohem Maße unterscheidet. Erst durch den getaperten Schichtaufbau, der durch unterschiedliche Mischungen zwischen Ethen und Trifluormethan erreicht wird, läßt sich eine vorteilhafte chemische und strukturelle Veränderung der Schicht erreichen, die eine Reduzierung der Permeation um mehr als einen Faktor 2.000 gegenüber der unbeschichteten Folie mit sich bringen.

Aus dem Diagramm gemäß Fig. 2, in dem der Teilchenstrom des Permeenten über die Zeit aufgetragen ist und das den Permeationsverlauf von Toluol durch eine Polyethylenfolie mit getapertem Schichtaufbau zeigt, ergibt sich, daß bei derartigen Folien stationäre Verhältnisse nach ca. 80.000 s erreicht werden. Der stationäre Diffusionsstrom beträgt hier $1.45 * 10^{13}$ Teilchen/$cm^2 * s$.

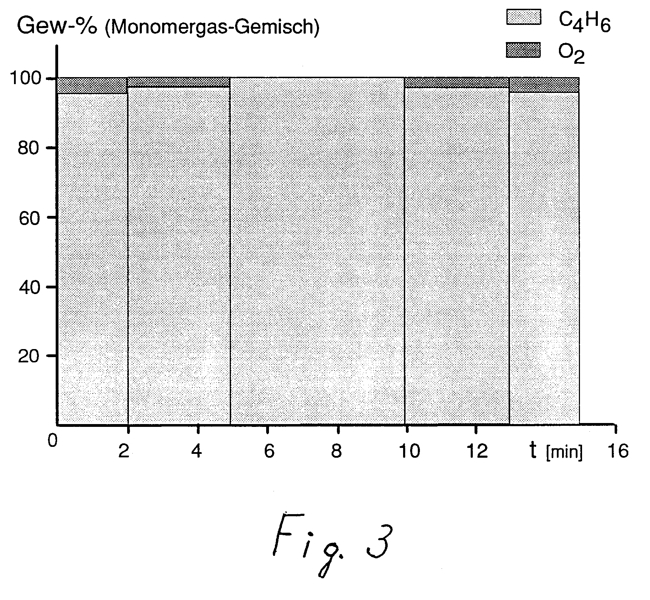

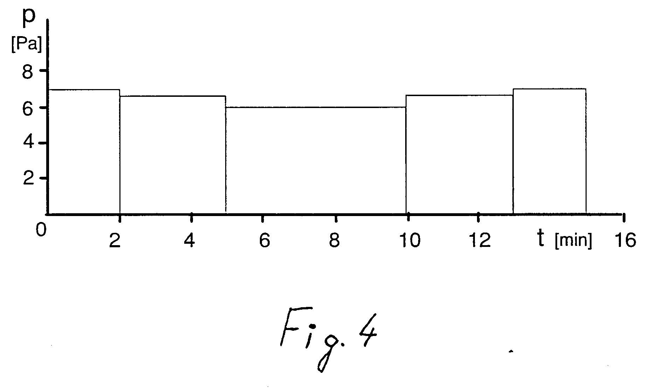

Aus dem Diagramm gemäß Fig. 3, in dem das Monomergas-Gemisch ($C_4H_6$) in Gew.-% über der Prozeßzeit aufgetragen ist, geht die Möglichkeit für die Herstellung eines zyklischen Schichtaufbaus auf der Innenoberfläche eines Kunststoffkraftstoffbehälters aus PE-HD unter Anwendung der Verfahrensvariante mit zyklisch variiertem Sauerstoffanteil hervor. Das Diagramm gemäß Fig. 4, in dem der Druck p über die Prozeßzeit aufgetragen ist, spiegelt den Druckverlauf im Verlauf der Herstellung des zyklischen Schichtaufbaus wider.

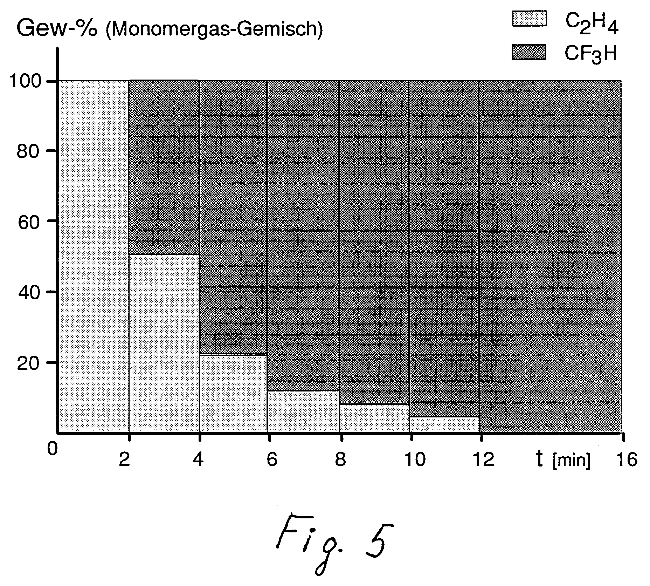

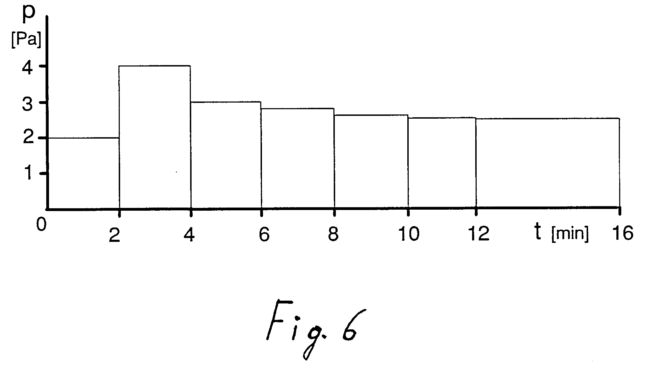

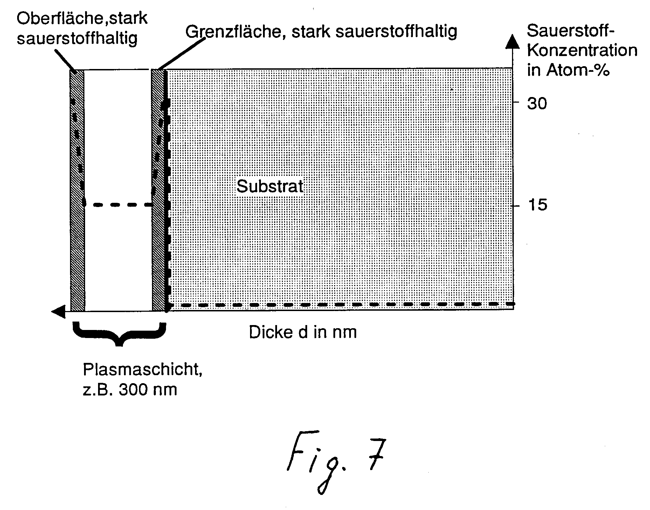

Die Fig. 5 und 6 geben in analoger Weise wie die Fig. 3 und 4 die Verhältnisse (Gew.-% des Monomergas-Gemisches über die Prozeßzeit) bzw. (Druckverhältnisse über die Prozeßzeit) für die Herstellung eines getaperten Schichtaufbaus zur Reduzierung der Permeation von Toluol durch PE-Folien bei Verwendung von Ethen ($C_2H_4$), Trifluormethan ($CF_3H$) und unterschiedlichen Mischungen aus beiden Monomeren wider. Wie die Elementanalyse belegt, ist bereits eine Kohlenwasserstoffschicht mit starken Sauerstoffanteilen auf das KKB-Substrat aufgebracht worden, wobei die Oberfläche des Substrats offensichtlich in einem Wasserstoffplasma vorbehandelt, in der Folge die Plasmaschicht mit Kohlenwasserstoff-Gasen und mit Sauerstoff angereicherten Monomer/-Träger-Gasgemischen oder stark sauerstoffhaltigen Monomer/-Träger-Gasgemischen aufgebaut und am Ende des Prozesses ein Sauerstoffplasma zur Versiegelung durchgeführt worden ist. Der letzte Schritt führt bei geeigneter Parameterwahl bzw. weichem Übergang mit kontinuierlicher Steigerung der Sauerstoffkonzentration zu einer extrem (bis 40 %) sauerstoffangereicherten Oberfläche der Plasmaschicht. Mit den dabei auftretenden Reaktionen ist eine hohe Vernetzung und die Bildung von funktionellen Gruppen an der Oberfläche möglich. Diese könnte wegen ihrer hohen Polarität ursächlich zu einer sehr guten Sperrwirkung gegen polare Kraftstoffanteile sowie wegen der hohen Packungsdichte auch gegen unpolare Bestandteile führen. In diesem Zusammenhang ist es interessant, den Einfluß einer Sauerstoffschicht zu ermitteln, die nicht an der Oberfläche der Plasmaschicht, sondern an der Grenzschicht zum Substrat aufgebracht ist. Es zeigt sich, daß der Aufbau einer Sauerstoff-Doppelsperre in Ober- und Grenzfläche gemäß Fig. 7 sinnvoll ist. Die periodische Folge solcher Doppelschichten kann auch durch eine zyklisch alternierende Sauerstoffkonzentration erreicht werden.

Ein derartiger Schichtaufbau hat folgende Vorteile:

a) Die sauerstoffreiche Grenzschicht Substrat-Plasmaschicht gewährleistet eine gute Haftung aufgrund verschiedener eingeführter funktioneller Gruppen (Carbonyl-, Carboxyl- und Hydroxylgruppen);

b) Die relativ sauerstoffarme Hauptschicht weist zwar nicht identische, aber zumindest ähnliche Materialeigenschaften (Elastizität, Wärmeausdehnung) wie das Substratmaterial auf. Ein zu hoher Sauerstoffanteil in diesem Bereich kann jedoch zu einer zu dichten Packung führen, wodurch die Sprödigkeit erhöht und ein Abbröckeln der Schicht begünstigt werden;

c) Die sauerstoffreiche Schichtoberfläche kann die Sperrwirkung der Schicht durch folgende Mechanismen verbessern. Zwei Mechanismen sind dabei denkbar:

- durch die erhöhte Polarität steigt die Packungsdichte der Schicht. Ein Hindurchdiffundieren wird dadurch erschwert,

- polare Moleküle, wie im Kraftstoff enthaltenes Methanol oder auch Wasser können sich über Wasserstoffbrücken an der sauerstoffhaltigen Schicht an- und in diese Schicht einlagern. Sie bilden so einen Schutzschild, der ein Durchsickern unpolarer Kohlenwasserstoffe verhindert. Ein Durchwandern der polaren Kraftstoffanteile ist nicht begünstigt, da keine Affinität zu der darunterliegenden unpolaren, sauerstoffarmen Schicht besteht.

Es gibt verschiedene Möglichkeiten, den Sauerstoffanteil in einer PE-Plasmaschicht zu erhöhen. Dem Prozeßgas können entweder sauerstoffhaltige Gase wie $CO_2$ oder $N_2O$ beigefügt werden oder molekularer Sauerstoff. Bei der Wahl des richtigen Oxidationsmittels spielt vor allem die erwünschte Oxidationsstärke eine Rolle. $CO_2$ stellt ein mildes Oxidationsmittel dar, $N_2O$ (Lachgas) ein stärkeres, $O_2$ ein mittleres. In jedem Fall läßt sich die Oxidationswirkung über den Partialdruck steuern. Es lassen sich alle in Abb. 2 beschriebenen Bereiche abdecken:

- Totaloxidation zu $CO_2$ und $H_2O$, was einer Verbrennung entspricht

- Partialoxidation, die zur Bildung funktioneller Gruppen führt, wobei auch auf die Einführung bestimmter funktioneller Gruppen Rücksicht genommen werden kann:
Starke Oxidation begünstigt die Bildung von Carboxyl-, mittlere die von Carbonyl- und schwache die von Hydroxylgruppen. In einer Plasmaschicht treten alle drei Sorten und zuzüglich noch Epoxy-, Peroxy-, Ether- und Estergruppen in wechselnden Anteilen auf.

- Radikalbildung, die nicht zu einer Steigerung des Sauerstoffgehalts führt, sondern lediglich zu Wasserstoffabspaltung mit anschließender Vernetzung, was einer sehr schwachen Oxidation der Kohlenstoffatome entspricht.

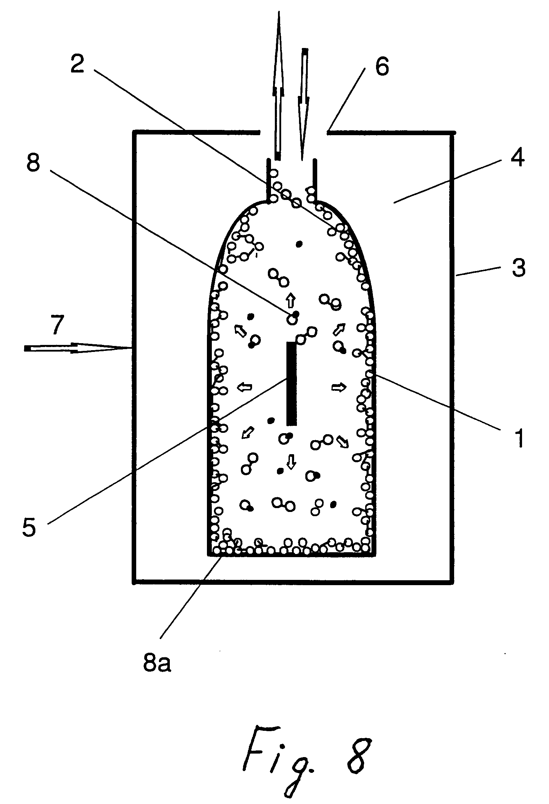

Fig. 8 zeigt eine schematische Schnittansicht einer Anordnung zur Durchführung des Verfahrens unter Mikrowellen- oder Hochfrequenzanregung, wobei ein Hohlkörper 1, dessen Innenfläche 2 zu beschichten ist, in einem Reaktor 3 angeordnet ist und in seinem Innenraum 4 einen Permanentmagneten 5 gehaltert aufweist. Über die Öffnung 6 des Hohlkörpers werden die Monomergase getrennt zu- oder abgeführt. Das Plasma 8 kann von außen durch Mikrowellen (z. B. 2.45 GHz) oder durch Hochfrequenzanregung erzeugt werden (Pfeil 7). Im Fall der Mikrowellenanregung kann der Mechanismus der Elektronenzyklotronresonanz durch geeignet innen oder außen angebrachte Permanent- oder Elektromagneten 5 ausgenutzt werden. Die Mikrowellen- oder Hochfrequenzleistung kann auch im Hohlkörper nach dem Prinzip des Gigatrons zur Erzeugung eines Plasmas eingesetzt werden.

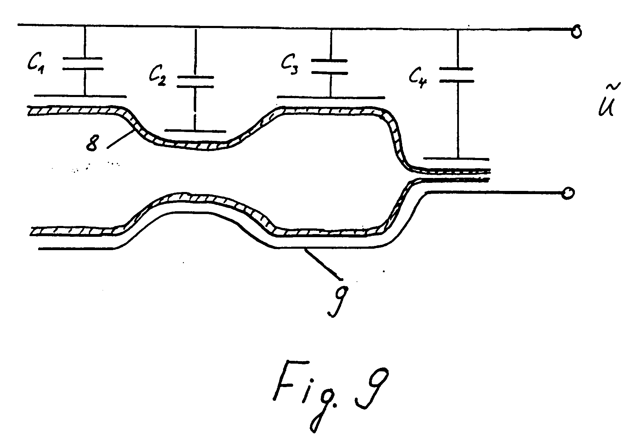

Fig. 9 zeigt eine Anordnung zur HF-Plasmaerzeugung in einem Behälter 8 mit örtlich strukturierten, kapazitiv entkoppelten Antennenbereichen, beispielsweise in Form von lokalisiert angebrachten geformten oder ebenen kapazitiven oder induktiven Strukturen, die ihrerseits untereinander kapazitiv - wie in Fig. 9 dargestellt - oder induktiv oder kapazitiv/induktiv entkoppelt sind. Die Kapazitäten zur Entkopplung können aus Kabeln bestehen.

## Patentansprüche

1. Verfahren zur plasmagestützten Herstellung multifunktionaler plasmapolymerisierter Schichten auf Kunststoffteilen, insbesondere auf der Innenoberfläche von Kunststoffkraftstoffbehältern (KKB) aus Polyethylen, bei dem eine das Plasma bildende Prozeßgasatmosphäre erzeugt und die Oberfläche der Kunststoffteile unter Beaufschlagung mit dem Plasma beschichtet werden, dadurch gekennzeichnet, daß unter Erzeugung einer Dünnschicht die Gasanteile der Prozeßgasatmosphäre über die Prozeßzeit durch variierende Monomer- und Trägergaskombinationen derart wechselnd gesteuert werden, daß polare und unpolare Elementanteile in der Dünnschicht variiert eingebaut werden.

2. Verfahren nach Anspruch 1, dadurch gekennzeichnet, daß ein getaperter Schichtaufbau der Dünnschicht erzeugt wird derart, daß die auf die Kunststoffteiloberfläche aufgebrachte erste Moleküllage chemisch identisch oder verwandt mit dem Material des Kunststoffteils ist und an diese erste Phase ein angepaßter chemischer Übergang zu der nach außen wirksamen, eine Benetzbarkeit des getaperten Schichtaufbaus verringernden Moleküllage gebildet wird.

3. Verfahren nach Anspruch 1, dadurch gekennzeichnet, daß die polaren und unpolaren Elementanteile in der Dünnschicht zyklisch wechselnd variiert werden.

4. Verfahren nach Anspruch 1 bis 3, dadurch gekennzeichnet, daß zur Erzeugung der Dünnschicht als Prozeßgase fluorhaltige, sauerstoffhaltige und/oder kohlenwasserstoffhaltige Prozeßgase verwendet werden.

5. Verfahren nach Anspruch 1, 3 und 4 , bei dem ein Kohlen-/- Wasserstoff-Schichtaufbau hergestellt wird, dadurch gekennzeichnet, daß bei der Erzeugung der Dünnschicht für einen zusätzlichen zyklisch variierenden $O_2$-Anteil im Prozeßgas gesorgt wird.

6. Verfahren nach Anspruch 1, 3 und 4 , bei dem ein überlagernd aufgebauter Kohlen-/Wasserstoff- und Fluorkohlenwasserstoff-Schichtaufbau hergestellt wird, dadurch gekennzeichnet, daß bei der Erzeugung der Dünnschicht für zyklisch wechselnde Fluoranteile im Prozeßgas und damit im Schichtaufbau der Dünnschicht gesorgt wird.

7. Verfahren nach Anspruch 2, dadurch gekennzeichnet, daß ausgehend von der Oberfläche eines Kunststoffteils aus Polyethylen ein getaperter Schichtaufbau einer Schichtdicke von 350 nm unter Verwendung von Ethen ($C_2H_4$), Trifluormethan ($CF_3H$) und variierenden Mischungen aus diesen beiden Monomeren in gesteuerter Weise wie folgt hergestellt wird:

   a) eine 70 nm Schicht aus einem $C_2H_4$-Plasma bei einem Gasdurchfluß von 30 sccm und einem Druck von 2 Pa,

   b) eine 50 nm Schicht aus einer Gasmischung von 30 sccm $C_2H_4$ und 30 sccm $CF_3H$ bei einem Druck von 4 Pa,

   c) eine 40 nm Schicht aus einer Gasmischung von 8 sccm $C_2H_4$ und 30 sccm $CF_3H$ bei einem Druck von 3 Pa,

   d) eine 35 nm Schicht aus einer Gasmischung von 4 sccm $C_2H_4$ und 30 sccm $CF_3H$ bei einem Druck von 2.8 Pa,

   e) eine 35 nm Schicht aus einer Gasmischung von 2.5 sccm $C_2H_4$ und 30 sccm $CF_3H$ bei einem Druck von 2.7 Pa,

   f) eine 25 nm Schicht aus einer Gasmischung von 1.0 sccm $C_2H_4$ und 30 sccm $CF_3H$ bei einem Druck von 2.6 Pa und

   g) eine 95 nm Schicht aus einem $CF_3H$-Plasma bei einem Gasdurchfluß von 30 sccm und einem Druck von 2.6 Pa, wobei das Plasma unter Anwendung der Elektron-Zyklotron-Resonanz mit einer mittleren Mikrowellenleistung von 300 Watt bei einem Druck von 5 Pa erzeugt wird.

8. Verfahren nach Anspruch 7, dadurch gekennzeichnet, daß die Fluor- und Kohlenwasserstoffverbindungen durch andere fluorhaltige und kohlenwasserstoffhaltige Monomere ersetzt werden.

9. Verfahren nach Anspruch 7, dadurch gekennzeichnet, daß die Zugabe der verschiedenen Gaskomponenten automatisch über Mass Flow Controller erfolgt.

10. Verfahren nach Anspruch 1 bis 9, dadurch gekennzeichnet, daß die entstehenden Schichten in einem Plasma mit Niederfrequenz-, Radiofrequenz- oder Mikrowellenanregung aufgebracht werden.

11. Verfahren nach Anspruch 10, dadurch gekennzeichnet, daß das Plasma mittels ECR-Technik unterstützt wird.

12. Verfahren nach Anspruch 11, dadurch gekennzeichnet, daß der Druck im Hohlkörper und in der Prozeßkammer gleich groß eingestellt wird und daß die Schichtabscheidung nur innerhalb des Hohlkörpers erfolgt.

13. Verfahren nach Anspruch 10 bis 12, dadurch gekennzeichnet, daß die HF-Abregung durch kapazitiv, induktiv oder induktiv/kapazitiv wechselseitig entkoppelten geteilten Elektrodenaufbau erfolgt.

14. Verfahren nach Anspruch 13, dadurch gekennzeichnet, daß zur Erzeugung der Entkopplungskapazitäten elektrische Kabel verwendet werden.

15. Verfahren nach Anspruch 14, dadurch gekennzeichnet, daß Koaxialkabel geeigneter Länge verwendet werden.

16. Verfahren nach Anspruch 1 bis 15, dadurch gekennzeichnet, daß zur Innenbeschichtung der Hohlkörper eine Gigatron-Anordnung verwendet wird.

17. Verfahren nach Anspruch 10 bis 16, dadurch gekennzeichnet, daß Mikrowellen- und HF-Leistungen geeignet zeitlich geformter Intensitätsverläufe zur Optimierung der chemischen Prozesse bei der Schichtbildung und zur Verringerung der mittleren thermischen Leistung und Belastung verwendet werden, wobei gleichzeitig zur Erzielung der gewünschten Plasmabildung hohe elektrische Feldstärken eingesetzt werden.

## Claims

1. Process for the plasma-aided production of multifunctional plasma-polymerized layers on plastic parts, especially on the interior surface of plastic fuel tanks of polyethylene, during which a process gas atmosphere is produced which forms the plasma and the surface of the plastic parts is coated with the plasma under admission <u>characterized thereby</u> that at the production of a thin layer the gas portions of the process gas atmosphere are alternately controlled in such a manner during the process period by varying monomer and carrier gas combinations that polar and non-polar element parts are incorporated in the thin layer in a varied manner.

2. Process in accordance with claim 1, <u>characterized thereby</u> that a tapered layer structure of the thin layer is produced in such a manner that the first molecule layer applied to the plastic part surface is chemically identical or related to the material of the plastic part and at this first phase an adapted chemical transition is formed to the molecule layer which is active to the outside and reduces the wettability of the tapered layer structure.

3. Process in accordance with claim 1, <u>characterized thereby</u> that the polar and non-polar element parts are varied in the thin layer in a cyclically changing manner.

4. Process in accordance with claims 1 to 3, <u>characterized thereby</u> that for the production of the thin layer process gases containing fluorine, oxygen, and/or hydrocarbons are used.

5. Process in accordance with claims 1, 3, and 4 in which a carbon-/hydrogen layer structure is produced, <u>characterized thereby</u> that at the production of the thin layer an additional cyclically varying $O_2$-portion is realized in the process gas.

6. Process in accordance with claims 1, 3, and 4, in which a superimposed layer structure of carbon-/hydrogen, and fluorocarbon is produced, <u>characterized thereby</u> that at the production of the thin layer cyclically changing fluorine portions are produced in the process gas and thus in the structure of the thin layer.

7. Process in accordance with claim 2, <u>characterized thereby</u> that starting from the surface of a plastic part of polyethylene, a tapered layer structure of a coat thickness of 350 nm is produced with the use of ethene ($C_2H_4$), trifluoromethane ($CF_3H$) end varying mixtures from these two monomers in a controlled manner as follows:

> a) a 70 nm coat of a $C_2H_4$-plasma at a gas flow of 30 sccm and a pressure of 2 pa,
>
> b) a 50 nm coat of a gas mixture of 30 sccm $C_2H_4$ and 30 sccm $CF_3H$ at a pressure of 4 Pa,
>
> c) a 40 nm coat of a gas mixture of 8 sccm $C_2H_4$ and 30 sccm $CF_3H$ at a pressure of 3 Pa,
>
> d) a 35 nm coat of a gas mixture of 4 sccm $C_2H_4$ and 30 sccm $CF_3H$ at a pressure of 2.8 Pa,
>
> e) a 35 nm coat of a gas mixture of 2.5 sccm $C_2H_4$ and 30 sccm $CF_3H$ at a pressure of 2.7 Pa,
>
> f) a 25 nm coat of a gas mixture of 1.0 sccm $C_2H_4$ and 30 sccm $CF_3H$ at a pressure of 2.6 Pa and
>
> g) a 95 nm coat of a $CF_3H$-plasma at a gas flow of 30 sccm $C_2H_4$ and a pressure of 2.6 Pa, whereby the plasma is produced by the use of the electron-cyclotron-resonance with a medium wicrowave capacity of 300 watt at a pressure of 5 Pa.

8. Process in accordance with claim 7, <u>characterized thereby</u> that the fluorines and hydrocarbons are replaced by other monomers containing fluorine and hydrocarbon.

9. Process in accordance with claim 7, <u>characterized thereby</u> that the addition of the various gas components takes automatically place via mass flow controllers.

10. Process in accordance with claims 1 to 9, <u>characterized thereby</u> that the resulting layers in a plasma are applied with low frequency, radio frequency, or microwave excitation.

11. Process in accordance with claim 10, <u>characterized thereby</u> that the plasma is supported by means of ECR-technology.

12. Process in accordance with claim 11, <u>characterized thereby</u> that the pressure in the hollow body and in the process chamber is set to be identical and that the separation of the coat takes place exclusively within the hollow body.

13. Process in accordance with claims 10 to 12, <u>characterized thereby</u> that the HF-de-excitation is realized by a subdivided arrangement of electrodes which is alternately decoupled in a capacitive, inductive, or inductive/capacitive manner.

14. Process in accordance with claim 13, characterized thereby that electrical cable is used for the production of the decoupling capacities.

15. Process in accordance with claim 14, characterized thereby that suitably long coaxial cable is used.

16. Process in accordance with claims 1 to 15, characterized thereby that a gigatron arrangement is used for the internal coating of the hollow bodies.

17. Process in accordance with claims 10 to 16, characterized thereby that microwave and HF-capacities of intensity courses which are appropriately formed with regard to time are used for the optimization of the chemical processes at the layer-formation and for the reduction of the medium thermal output and load, whereby simultaneously high electrical field strengths are applied for the achievement of the desired plasma formation.

**Revendications**

1. Procédé pour la production à l'appui de plasma de couches multifonctionnelles polymérisées à plasma sur des pièces plastiques tout particulièrement sur la surface intérieure de réservoirs plastiques à carburant en polyéthyléne a l'occasion duquel une atmosphère gazeuse de procédé est produite formant le plasma et la surface des pièces plastiques est, par alimentation, revêtue de plasma, caractérisé par le fait qu'en réalisant une couche mince les parts gazeuses de l'atmosphère gazeuse de procéde sont durant la période de procédé commandées alternativement par des combinaisons variantes de monomère et de gaz porteur de manière à incorporer dans la couche mince des parts d'éléments variées polaires et non-polaires.

2. Procédé suivant revendication 1, caractérisé par le fait qu'une structure de couche progressive est réalisée de sorte que la première couche moléculaire appliquée sur la surface de la pièce plastique est chimiquement identique ou semblable à la matière de la pièce plastique et qu'à cette première phase une transition chimique adaptée est réalisée par rapport à la couche moléculaire active vers l'extérieur réduisant une mouillabilité de la structure de couche progressive.

3. Procédé suivant revendication 1, caractérisé par le fait que les parts d'éléments polaires et non-polaires dans la couche mince sont variées à cycles alternatifs.

4. Procédé suivant revendications 1 à 3, caractérisé par le fait que pour la production de la couche mince sont utilisés comme gaz de procédé des gaz de procédé fluorisés, oxygénés et/ou hydrocarbonés.

5. Procédé suivant revendications 1, 3 et 4 à l'occasion duquel est réalisée une structure de couche carbone/hydrogène, caractérisé par le fait que lors de la production de la couche mince une part $O_2$ additionnelle à cycle variant est réalisé dans le gaz de procédé.

6. Procédé suivant revendications 1, 3 et 4 a l'occasion duquel une structure de couche à carbone/hydrogène et à hydrocarbure fluoré superposée est réalisée, caractérisé par le fait que lors de la réalisation de la couche mince des parts de fluor à cycle alternatif sont pourvues dans le gaz de procédé et par conséquent dans la structure de la couche mince.

7. Procédé suivant revendication 2, caractérisé par le fait que sur la base de la surface d'une pièce plastique en polyéthyléne une structure de couche progressive d'une épaisseur de couche de 350 mm est produite comme suit de manière pilotée en utilisant de l'éthyléne ($C_2H_4$), du trifluorméthane ($CF_3H$) et des mélanges variants sur la base de ces deux monomères:

a) une couche de 70 nm a partir d'un plasma $C_2H_4$ avec un courant gazeux de 30 ccm et une pression de 2 Pa,

b) une couche de 50 nm à partir d'un mélange gazeux de 30 sccm de $C_2H_4$ et de 30 sccm de $CF_3H$ avec une pression de 4 Pa,

c) une couche de 40 nm à partir d'un mélange gazeux de 8 sccm $C_2H_4$ et de 30 sccm de $CF_3H$ avec une pression de 3 Pa,

d) une couche de 35 nm à partir d'un mélange gazeux de 4 sccm de $C_2H_4$ et de 30 sccm de $CF_3H$ avec une pression de 2.8 Pa,

e) une couche de 35 nm à partir d'un mélange gazeux de 2.5 sccm $C_2H_4$ et de 30 sccm $CF_3H$ avec une pression de 2.7 Pa,

f) une couche de 25 nm à partir d'un mélange gazeux de 1.0 sccm $C_2H_4$ et de 30 sccm de $CF_3H$ avec une pression de 2.6 Pa et

g) une couche de 95 nm à partir d'un plasma $CF_3H$ avec un courant gazeux de 30 sccm et une pression de 2.6 Pa, le plasma étant produit avec une puissance moyenne micro-ondes de 300 Watt à une pression de 5 Pa en utilisant la résonance électron-cyclotron.

8. Procédé suivant revendication 7, <u>caractérisé par le fait</u> que les composés d'hydrogéne fluoré et d'hydrocarbure sont remplacés par d'autres monomères fluorisés et hydrocarburés.

9. Procédé suivant revendication 7, <u>caractérisé par le fait</u> que l'addition des différents composants gazeux est réalisé automatiquement par le mass flow controller.

10. Procédé suivant revendications 1 à 9, <u>caractérise par le fait</u> que les couches réalisées dans un plasma sont appliquées par excitation basse fréquence, radiofréquence ou micro-ondes.

11. Procédé suivant revendication 10, <u>caractérisé par le fait</u> que le plasma est supporté moyennant la technologie ECR.

12. Procédé suivant revendication 11, <u>caractérisé par le fait</u> que la pression dans le corps creux et dans la chambre de procédé est identique et que la séparation de couche n'est effectuée qu'a l'intérieur du corps creux.

13. Procédé suivant revendications 10 à 12, <u>caracté-risé par le fait</u> que la désexcitation H.F est réalisée moyennant une disposition des électrodes subdivisée découplée mutuellement de manière capacitive, inductive ou inductive/capacitive.

14. Procédé suivant revendication 13, <u>caractérisé par le fait</u> que des câbles électriques sont utilisés pour produire les capacités de découplage.

15. Procédé suivant revendication 14, <u>caractérisé par le fait</u> qu'on utilise des câbles coaxiaux de longueur appropriée.

16. Procédé suivant revendications 1 à 15, <u>caractérisé par le fait</u> qu'une disposition gigatron est utilisée pour le revêtement intérieur du corps creux.

17. Procédé suivant revendications 10 à 16, <u>caracté-risé par le fait</u> que des puissances micro-ondes et H.F. appropriées d'allures d'intensité formées temporellement sont utilisées pour l'optimisation des processus chimiques lors de la formation de couches et pour la réduction de la puissance thermique moyenne et la charge tout en appliquant simultanément des intensités du champ élevées pour réaliser la formation de plasma souhaitée.

Fig. 1

PE-HD (Dicke: 0.1 mm), unbeschichtet

Teflonartige Schicht auf PE-HD

PE-HD mit getapertem Schichtaufbau

Teilchenstrom [a.u.]

Zeit [s]

Fig. 2

Fig. 3

Fig. 4

Fig. 5

Fig. 6

Oberfläche,stark
sauerstoffhaltig

Grenzfläche, stark sauerstoffhaltig

Sauerstoff-
Konzentration
in Atom-%

30

Substrat

15

Dicke d in nm

Plasmaschicht,
z.B. 300 nm

Fig. 7

Fig. 8

Fig. 9